# EUROPEAN PATENT SPECIFICATION

(11) **EP 0 379 383 B1**
(45) Date of publication and mention of the grant of the patent: **27.09.1995**
(21) Application number: 90300574.2
(22) Date of filing: 19.01.1990
(51) Int. Cl.: E02D 29/09

(54) **Method of constucting underwater buildings**
Verfahren zum Herstellen von Unterwasserbauwerken
Procédé pour construire des batiments sous-marins

(30) Priority: 20.01.1989 JP 10004/89
(43) Date of publication of application: 25.07.1990
(73) Proprietor: Niimura, Masateru, Tokyo (JP)
(72) Inventor: Niimura, Masateru, Tokyo (JP)
(74) Representative: Fenlon, Christine Lesley

(56) References cited:
- EP-A- 0 082 034
- DE-A- 1 963 852
- DE-A- 2 452 161
- DE-A- 2 542 850
- GB-A- 1 366 770

## Description

The invention relates to a construction method for underwater buildings and in particular, but not exclusively, concerns large scale underwater buildings.

Recently the situation has arisen where living space is concentrated in cities and spare land has become difficult to obtain. Thus, for effective land utilization, it is advantageous to construct large buildings not designed for human habitation, such as warehouses or garages, underwater, e.g. under the surface of the sea.

For underwater buildings, large buildings such as warehouses or garages can first be constructed on land and then carried by ship to the appropriate location and sunk under water. This method is limited to buildings dimensioned so as to be able to be carried by the ship etc.. The method is very expensive in terms of time and money.

Another possibility is to drain the desired area, build the building as if it were on land and then reflood the area so the building is then underwater. This construction method has no limitations with regard to the dimensions of the building and there are no effects due to constructing underwater to be considered. However, this method is limited to shallow water, takes time and is expensive, especially the step of draining the building area and maintaining the area free of water whilst building takes place.

Another method was proposed in DE-A-1963852. That method included the steps of floating a buoyant building base on a body of water; constructing an outer wall on said base; and sinking the building as said outer wall is erected at such a rate that the top of that wall, during its construction, remains above the surface of the body of water as the height of the building increases. However, the method disclosed in DE-A-1963852 requires the base of the building to be supported on piles, along which the building is lowered by means of hydraulic jacks or the like during construction as the overall height of the building increases. A simpler and less costly method is desirable.

According to a first aspect of the invention there is provided a method of constructing an underwater building comprising the steps of: floating a buoyant building base on a body of water; constructing an outer wall on said base; and sinking the building as said outer wall is erected at such a rate that the top of that outer wall, during its construction, remains above the surface of the body of water as the height of the building increases; characterised in that an inner wall is constructed on said base so as to define with the outer wall a cavity; water is introduced into said cavity for sinking the building; and in that said building during construction and sinking is fixed to the bottom of the body of water by anchoring means.

DE-A-1963852 proposes that the space between two or more adjacent floors at the bottom of the building be flooded temporarily to overcome hydrostatic pressure acting against the downward urging of the jacks, but does not have such a cavity for sinking the building.

Preferably at the conclusion of construction, the building rests on the bottom of the body of water.

Preferably the method includes the step of arranging the density of the building so as to be greater than that of water and less than that of a surface on which the building finally rests.

Preferably the method includes the step of constructing an upper portion of the building, which portion at the conclusion of construction has a part which remains above the surface of the water for access to the building. The upper portion may be formed as a tower portion extending upwardly from the main body of the building.

Preferably when the building is in use, the surface pressure on the portion of the building under water is larger than that on that part of the tower portion above the body of water.

The base may be secured the base relative to the bottom of the water.

The method may be carried out at that the location at which the building is to be erected.

Preferably the building includes a base resting on the bottom of a body of water, a double wall construction on the base comprising an outer wall and an inner wall to form a cavity there-between, and an entrance/exit above the surface of the water. The walls may be manufactured from water resistant and pressure resistant material such as reinforced concrete.

The building may include means for controlling the amount of water in the cavity.

Certain embodiments of the invention can be designed so that the pressure on the body of the building under water due to water pressure is greater than the pressure on the part of the building extending above the water due to wind and waves. This gives stability to the building and the building can remain securely fixed even during stormy conditions.

In certain circumstances it may be desirable that the specific gravity of the building is a little greater than that of the water but less than that of the ground at the bottom of the water. The specific gravity of the building can, of course, be controlled by the volume of water in the building. The building can thus be securely seated even on a soft surfaced bottom since the rate at which the building sinks and the force which it exerts on the bottom of the water can be controlled by the volume of water in the building.

The specific gravity of the building can also be adjusted by other means such as a prepared weight and/or an anchor.

Certain embodiments of the invention may be designed so that during conditions such as an earthquake, transmission of the vibration to the building can be effectively absorbed by the surrounding water.

Since the underwater building has double construction of the inside and outside walls, it is not necessary to have rigorous waterproofing treatment of the outside walls. Even if waterproofing of the outside walls is not sufficient, and water enters through the wall or humidity in the building becomes high, water can be prevented from entering the inside of the inside wall by having water drainage equipment and/or air adjusting equipment.

Since the building can be constructed at its designated location, it is not necessary to dimension the building so it can be carried by ship and this also reduces the cost.

For a better understanding of the present invention and as to how the same may be carried into effect, reference will now be made by way of example to the accompanying drawings in which:
Figure 1 is a sectional view of an underwater building embodying the invention;
Figure 2 is a view of a base of the building of Figure 1 to an enlarged scale;
Figure 3 is a plan view of the base as shown in Figure 2;
Figures 4, 5, and 6 show various stages of the construction of the building of Figure 1;
Figure 7 is a schematic view of the building of Figure 1 on an inclined surface.
Figure 8 is a schematic plan view of a second embodiment; and
Figure 9 is a schematic longitudinal sectional view of the embodiment of Figure 8.

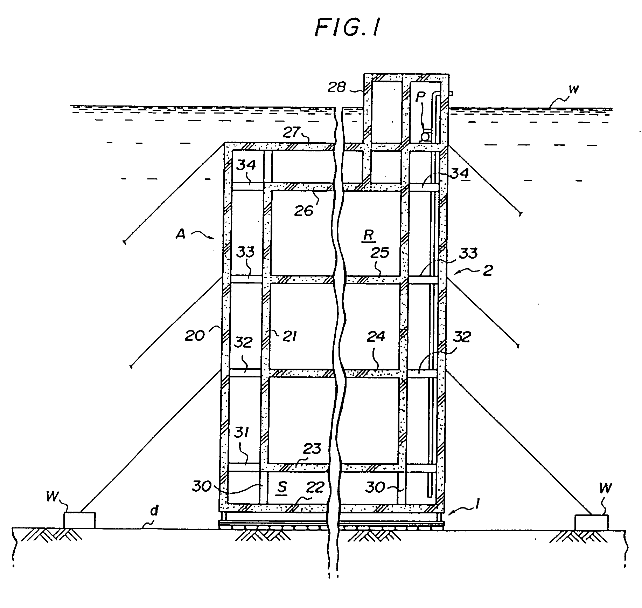

Figure 1 shows an underwater building A comprising a base 1 made of steel or any suitable material and a body 2 of the building 2 to be constructed on the base 1.

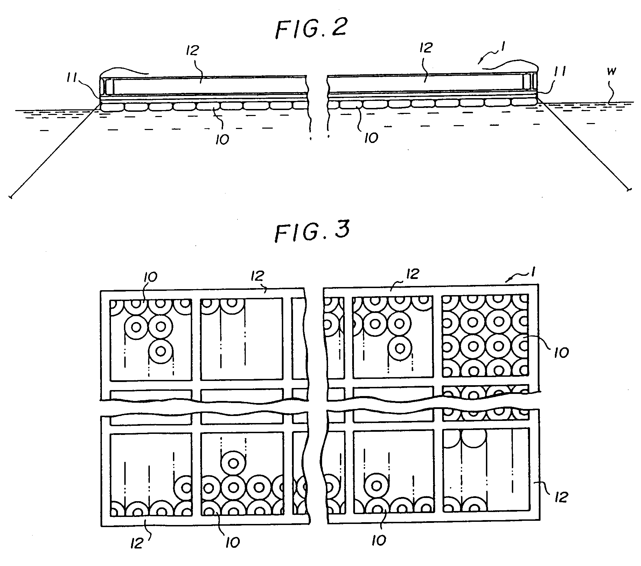

The base 1 comprises, as shown in Figures 2 and 3, a number of floats 10 made of tyre tubing or other suitable material, a connecting frame 11 arranged on the upper sides of the float 10 to couple the floats together and a holding frame 12 set in the upper side of the connecting frame 11. A large buoyancy can be obtained by using the appropriate number of floats 10.

Polystyrene foam, for example foam styrol, can be substituted for the tyre tubing of the floats 10 for a large buoyancy.

Consequently the base 1 can be floated on a water surface w, and does not fully sink even after material for constructing the building body 2 is put on the base 1, or when the first floor of the body 2 of the building is constructed on the base 1.

The base 1 is carried by a ship to a position where the underwater building is to be constructed. Alternatively the base 1 may be assembled at the position where the building is to be constructed. Whilst the base 1 is floating on the water surface w, it is fixed to the sea bottom d via an anchor W so that the base 1 is not carried away by water currents.

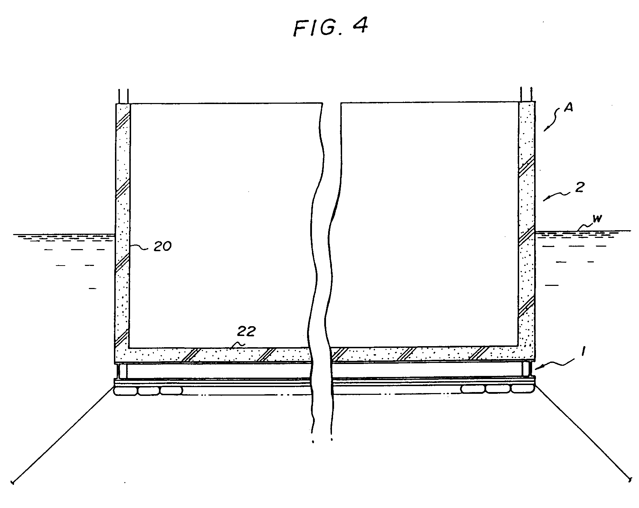

The body of the building 2 is constructed on the base 1. As shown in Figures 4, 5 and 6, the body of the building 2 comprises an outside wall 20 and an inside wall 21 which together form a double structure. The body of the building 2 further comprises a bottom floor 22, a first floor 23, a second floor 24, a third floor 25, a top floor 26, a ceiling 27 and a tower portion 28. Access to the building is obtained through the tower portion 28.

The bottom floor 22 is constructed on the base 1. Next, the outside wall 20 for the first floor only is built on the bottom floor 22. Once the outside wall 20 has been erected, the inside wall 21 can be erected and is thus sheltered from the effect of wind and water by the outside wall 20.

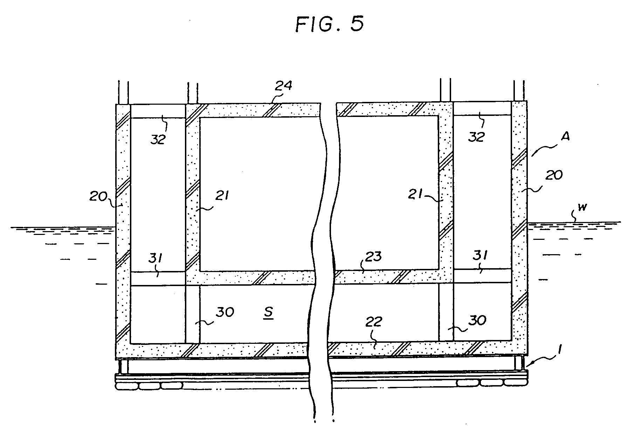

Before the inside wall 21 haa been erected, the first floor 23 is constructed parallel to the bottom floor 22 and is supported thereon by pillars 30. The inside wall 21 is constructed at right angles to the first floor 23. Beams 31 extend at right angles from the lower end of the inside wall 21 to the outside wall 20, as shown in Figure 5, so as to provide further support for the structure. A cavity S is thus provided between the inside walls 21, outside walls 20, the bottom floor 21 and first floor 23 and into which water can be introduced.

The second floor 24 is then assembled on top of the inside wall 21. Beams 32 extend in the plane containing the second floor 24 from the edge of the second floor to the outside wall 20 as shown in the Figure 5. The inside wall 21 is extended from the second floor 24 after the outside wall 20 has been extended by a similar height.

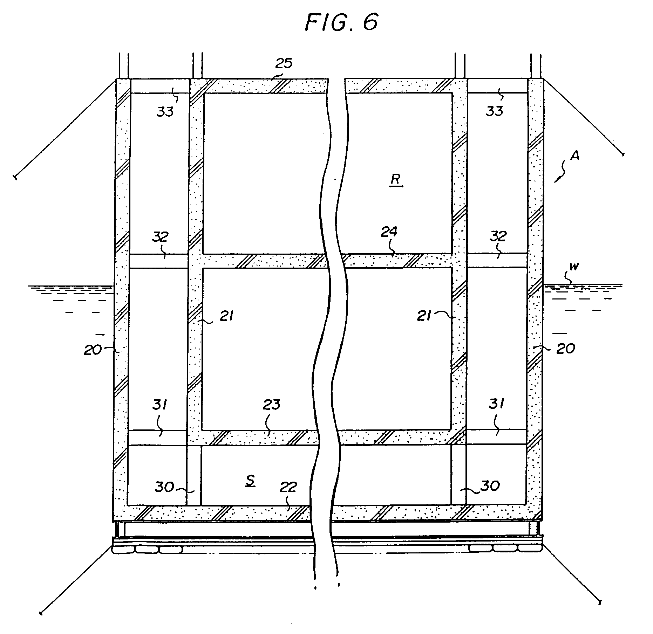

As with the second floor 24, the third floor 25 is assembled on the now extended inside wall 21. Beams 33 provide support in exactly the same manner as beams 32 and are positioned as shown in Figure 6. The inside walls 21 and the outside walls 20 are extended accordingly with the outside walls being extended first. Using the same technique as described hereinabove, the top floor 26, the ceiling 27, the tower portion 28 and beams 34 are erected as shown in Figure 1 so as to complete the body of the building 2.

The outside wall 20 and the inside wall 21 are made of a water resistant and pressure resistant material such as reinforced concrete so as to ensure watertightness of the building A.

The outer structure of the body of the building 2 is provided by the outside wall 20, the bottom floor 22, the ceiling 27 and the tower portion 28. The inside structure of the underwater building provided by the inside wall 21, the floors 23 to 25 and the top floor 26. The area defined by the inner structure is designated R. The area R of the building can be utilized as, for example, a warehouse or a garage and elevators may be fitted. In use, the tower portion 28 extends above the surface of the water and access to the building may be gained through the tower portion.

Water can be let in and drained out from the cavity S using pump P positioned in the tower portion 28. The weight of the building 2 increases with increase in height thus causing it to sink, and if necessary water can be allowed into cavity to facilitate the sinking of the building. The presence of the water in the cavity may or may not be necessary for stability when the buildings is completed. It can be used to supply extra stability during stormy conditions by increasing the volume of water present.

When the building is in place, the forces b on the tower portion 28, which is above the water surface, are due mainly to the wind and waves. The part of the building under water is subject to the forces a from the water itself. Since a > b the building remains stable even in stormy conditions.

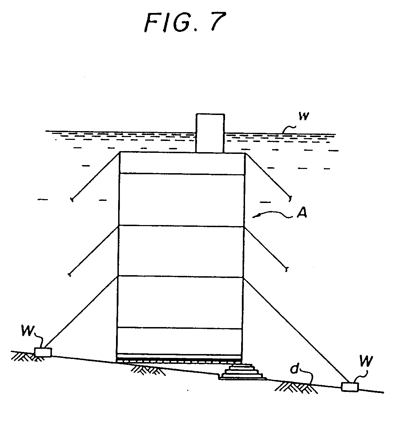

The underwater building A can be utilized as a warehouse or a garage. It can be also used as a breakwater or a block for protection from waves. The building can also be erected on inclined surfaces as shown in figure 7. It is desirable to provide additional support at one end of the base 1 so as to provide a horizontal base for the building.

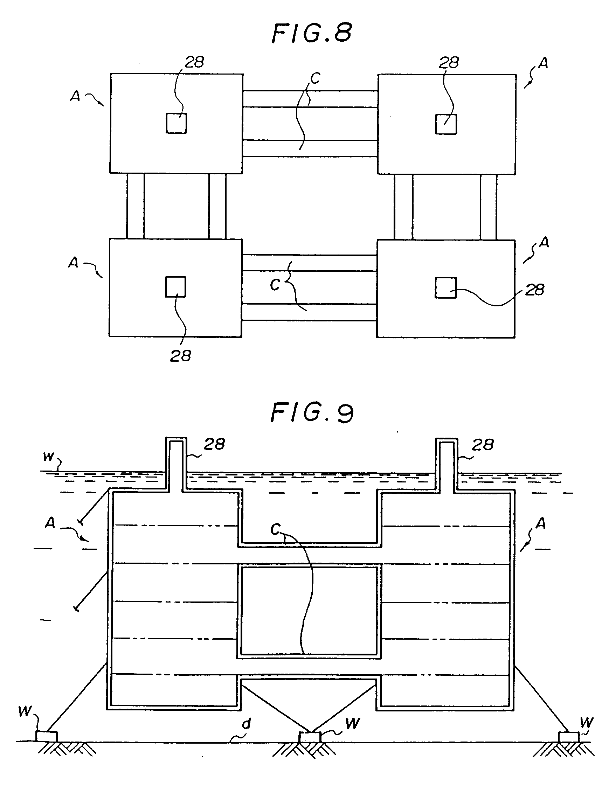

Figures 8 and 9 show a second embodiment of underwater structure in which four of the buildings of the first embodiment are prepared and are connected to each other as shown in Figure 8 by connecting passages C. Thus people and objects are able to move freely between the buildings. The construction and operation of the buildings are the same as those of the first embodiment. Any number of underwater buildings A can be connected together in any suitable configuration.

## Claims

1. A method of constructing an underwater building (A) comprising the steps of: floating a buoyant building base (1) on a body of water (w); constructing an outer wall (20) on said base (1); and sinking the building (A) as said outer wall (20) is erected at such a rate that the top of that outer wall (20), during its construction, remains above the surface of the body of water (w) as the height of the building (A) increases; characterised in that an inner wall (21) is constructed on said base (1) so as to define with the outer wall (20) a cavity (S); water is introduced into said cavity (S) for sinking the building; and in that said building (A) during construction and sinking is fixed to the bottom of the body of water (w) by anchoring means (W).

2. A method as claimed in Claim 1, wherein at the conclusion of construction, the building rests on the bottom of the body of water.

3. A method as claimed in Claim 2, including the step of arranging the density of the building (A) so as to be greater than that of water and less than that of a surface on which the building finally rests.

4. A method as claimed in Claim 1, 2 or 3, including the step of constructing an upper portion (28) of the building, which portion at the conclusion of construction has a part which remains above the surface of the water for access to said building (A).

5. A method as claimed in Claim 4, wherein said upper portion is formed as a tower portion extending upwardly from the main body of the building.

6. A method as claimed in Claim 5, including the step of constructing the outer wall (20) such that, when the building is in use, the surface pressure on the portion of the building under water is larger than that caused by atmospheric conditions, such as wind and waves, on that part of the tower portion (28) above the body of water.

## Patentansprüche

1. Verfahren zur Konstruktion eines Unterwasserbauwerks (A), das die Schritte umfaßt: Schwimmenlassen eines tragenden Bauwerkfundaments (1) auf einem Wasserkörper (w), Aufrichten einer Außenwand (20) auf dem Fundament (1) und Absenken des Bauwerks (A) in dem Maße wie Außenwand (20) aufgerichtet wird, so daß die Spitze der Außenwand während ihrer Konstruktion, wie die Höhe des Bauwerks (A) zunimmt, über der Oberfläche des Wasserkörpers (w) verbleibt, dadurch gekennzeichnet, daß eine Innenwand (21) auf dem Fundament (1) aufgerichtet wird, die mit der Außenwand (20) einen Hohlraum (S) bildet; daß Wasser in den Hohlraum (S) hereingelassen wird, um das Bauwerk abzusenken; und daß das Bauwerk (A) während der Konstruktion und des Absenkens am Grund des Wasserkörpers (w) durch Ankereinrichtungen (W) fixiert wird.

2. Verfahren nach Anspruch 1, dadurch gekennzeichnet, daß am Ende der Konstruktion das Bauwerk auf dem Grund des Wasserkörpers steht.

3. Verfahren nach Anspruch 2, dadurch gekennzeichnet, daß es den Schritt umfaßt, die Dichte des Bauwerks (A) so zu bestimmen, daß sie größer ist als die von Wasser und kleiner ist als die der Oberfläche, auf der das Bauwerk schließlich aufliegt.

4. Verfahren nach Anspruch 1, 2 oder 3, dadurch gekennzeichnet, daß es den Schritt umfaßt, einen oberen Abschnitt (28) des Bauwerks zu konstruieren, wobei dieser Abschnitt nach Abschluß der Konstruktion als Zugang zum Bauwerk (A) ein Teil aufweist, das über der Oberfläche des Wassers verbleibt.

5. Verfahren nach Anspruch 4, dadurch gekennzeichnet, daß der obere Abschnitt als ein turmförmiger Abschnitt ausgebildet ist, der sich vom Hauptkörper des Bauwerks nach oben erstreckt.

6. Verfahren nach Anspruch 5, dadurch gekennzeichnet, daß es den Schritt umfaßt, die äußere Wand (20) so zu konstruieren, daß bei Gebrauch des Bauwerks der Oberflächendruck auf den Abschnitt des Bauwerks unter Wasser größer ist als der auf den Teil des turmförmigen Abschnitts (28) über dem Wasserkörper, der von atmosphärischen Verhältnissen, wie Wind und Wellen, verursacht wird.

## Revendications

1. Procédé de construction d'un bâtiment sous-marin (A) comprenant les étapes consistant à : mettre à flot sur une étendue d'eau (w) une base de bâtiment (1) capable de flotter ; construire une paroi extérieure (20) sur ladite base (1) ; et immerger le bâtiment (A) à mesure que ladite paroi extérieure (20) s'élève, à une vitesse telle que le sommet de ladite paroi extérieure (20) reste, pendant sa construction, au-dessus de la surface de l'étendue d'eau (w) alors que la hauteur du bâtiment (A) augmente,
caractérisé en ce qu'une paroi intérieure (21) est construite sur ladite base (1) de manière à définir une cavité (S) avec la paroi extérieure (20), en ce que de l'eau est introduite dans ladite cavité (S) pour immerger le bâtiment, et en ce que ledit bâtiment (A) est fixé, pendant sa construction et son immersion, au fond de l'étendue d'eau (w) par un moyen d'ancrage (W).

2. Procédé selon la revendication 1, dans lequel le bâtiment repose sur le fond de l'étendue d'eau à la fin de la construction.

3. Procédé selon la revendication 2, comprenant l'étape consistant à adapter la densité du bâtiment (A) pour qu'elle soit supérieure à celle de l'eau et inférieure à celle d'une surface sur laquelle le bâtiment repose finalement.

4. Procédé selon la revendication 1, 2 ou 3, comprenant l'étape consistant à construire une partie supérieure (28) du bâtiment, laquelle partie a une portion qui reste au-dessus de la surface de l'eau à la fin de la construction pour permettre l'accès audit bâtiment (A).

5. Procédé selon la revendication 4, dans lequel ladite partie supérieure est formée comme une tour qui se dresse du corps principal du bâtiment.

6. Procédé selon la revendication 5, comprenant l'étape consistant à construire la paroi extérieure (20) de telle manière que, lorsque le bâtiment est utilisé, la pression de surface exercée sur la partie du bâtiment qui est sous l'eau est plus grande que celle provoquée par les conditions atmosphériques telles que le vent ou les vagues sur la portion de la partie formant tour (28) qui se trouve au-dessus de la surface de l'eau.
